# EUROPÄISCHE PATENTSCHRIFT

(11) **EP 1 746 296 B1**
(45) Veröffentlichungstag und Bekanntmachung des Hinweises auf die Patenterteilung: **04.04.2018**
(21) Anmeldenummer: 06116448.9
(22) Anmeldetag: 30.06.2006
(51) Int. Cl.: F16C 11/06, F16C 23/04

(54) **Kugelgelenklenker**
Ball joint link arm
Bras de liaison à articulation à rotule

(30) Priorität: 18.07.2005 US 183509
(43) Veröffentlichungstag der Anmeldung: 24.01.2007
(73) Patentinhaber: Deere & Company, Moline, IL 61265 (US)
(72) Erfinder: Wood Jr., Robert L, Waterloo, IA 50703 (US); Kollath, Michael D, Dunkerton, IA 50626 (US)
(74) Vertreter: Holst, Sönke

(56) Entgegenhaltungen:
- DE-U1- 9 418 745
- FR-A- 1 373 761
- US-A- 3 151 882
- US-A- 3 589 779
- US-A- 3 960 416
- US-B2- 6 520 682

## Beschreibung

Die Erfindung betrifft ein Kugelgelenklenker, umfassend einen langgezogenen Lenkerteil mit einer Längsachse, eine an einem Endbereich des Lenkers ausgebildete Lenkeröffnung, welche eine mittig angeordnete Querachse aufweist, die in Bezug zur Längsachse senkrecht ausgerichtet ist, einen herausnehmbaren, abgeflachten Kugelkörper, mit einer Breite, die durch gegenüberliegende im Wesentlichen flach ausgebildete Seiten definiert ist und mit einer sphärisch ausgebildeten Umfangsfläche, wobei die Lenkeröffnung eine innere sphärisch ausgebildete Oberfläche aufweist, die passend zu der sphärisch ausgebildeten Umfangsfläche des Kugelkörpers ausgebildet ist, und mit einem Paar von Einsetzöffnungen versehen ist, die an gegenüberliegenden Seiten der Längsachse angeordnet sind und sich nur teilweise in den Endbereich hinein in paralleler Richtung zur Querachse erstrecken, wobei der Kugelkörper von den Einsetzöffnungen aufnehmbar ist, wenn dieser mit seinen gegenüberliegenden Seiten parallel zur Querachse ausgerichtet ist, wobei ein mit dem Endbereich verbindbares Klemmelement vorgesehen ist, um zu verhindern, dass der Kugelkörper aus der Lenkeröffnung bewegt werden kann, wenn dieser zu den Einsetzöffnungen ausgerichtet ist.

Ein herkömmlicher Mittellenker einer Dreipunkt-Anhängevorrichtung weist Enden auf, in denen eine sphärische Lagerbuchse oder eine Kugel in einer Lagerpfanne eingeschlossen ist. Die Kugel weist eine mittlere Bohrung auf, so dass über einen Bolzen eine Verbindung zu einer Traktorhalterung oder zu einer Arbeitsgerätekupplung hergestellt werden kann. Während normaler Betriebsbedingungen verdreht sich die Kugel innerhalb der Lagerpfanne und kann verschleißen. Wenn der Verschleiß einen Punkt erreicht hat, bei dem ein unerwünschtes Maß an Spiel zwischen der Kugel und der Lagerpfanne vorherrscht, dann muss die Kugel oder das gesamte Ende ausgetauscht werden.

Bei vielen Kugelgelenklenkern ist dies nicht möglich oder kann nicht auf einfache Weise erfolgen. Viele Lenker weisen fest in der Lagerpfanne installierte Kugeln auf, wobei die Lenker derart geschmiedet sind oder Bördelungen aufweisen, dass ein Teil der Kugel abgedeckt wird, um diese einzuschließen. Bei diesen Ausführungen kann die Kugel nicht ausgetauscht werden, weil das Material erheblich deformiert werden müsste, um die Kugel entfernen zu können, was zum Bruch führen könnte.

Eine weitere gebräuchliche Ausführung eines Kugelgelenklenkers weist eine eingepresste Aufnahme auf, die die Kugel am Ende einschließt. Diese Ausführung ermöglicht ein Ersetzen der Kugel nur dann, wenn geeignetes Werkzeug vorhanden ist, um die Aufnahme aus- und wieder einzubauen. Aber oftmals ist die Aufnahme durch Bördelungen am Ende fixiert, wodurch ein Austauschen der Kugel nicht möglich ist. Es ist wünschenswert, eine Ausführung eines Kugelgelenklenkers zu haben, welche den Austausch nur der Kugel ermöglicht, anstelle einer Ausführung, die den Austausch des gesamten Lenkers erfordert.

Ein Lenker mit einer austauschbaren Kugelverbindung wird in US 6,520,682 A offenbart. Diese Ausführung weist einen zweiteiligen Kugel-Buchsen-Zusammenbau auf. Die Buchse verhindert ein verdrehen der Kugel in eine Position, in der die Kugel durch eine Öffnung hindurchgeführt werden kann. Wenn es notwendig ist, die Kugel auszutauschen, dann wird zuerst die Buchse aus einer sich durch die Kugel erstreckenden Bohrung entfernt und anschließend die Kugel um 90° verdreht und durch die Öffnung am Lenker entfernt. Demzufolge bedarf diese Ausführung eines zweiteiligen Zusammenbaus, womit ein kostenintensives Herstellen und Härten beider Teile verbunden ist. Ferner müssen bei dieser Ausführung sowohl die Kugel, als auch die Buchse einen relativ dünnen Querschnitt aufweisen. Dies macht sie anfällig gegenüber Spannungen und verkürzt die Einsatzzeit, so dass die Kugel oder die Buchse reißen oder brechen kann, bevor sie verschlissen ist.

Die US 3 960 416 A offenbart eine Kugelgelenkverbindung mit einem Lenkerteil und einem Kugelkörper, der in einer am Lenkerteil sphärisch ausgebildeten Kugelschale gelagert ist. Der Kugelkörper wird durch eine am Rand der Kugelschale ausgebildete Öffnung eingesetzt. Die Öffnung wird durch ein sphärisch ausgebildetes Klemmelement verschlossen und verhindert ein Austreten des Kugelkörpers. Nachteilig ist, dass das Klemmelement als relativ aufwändiges Bauteil ausgebildet und insebesondere mit einer relativ aufwändig herzustellenden sphärischen Oberfläche versehen ist.

Die US 4,466,631 offenbart einen weiteren bekannten Lenker.

Die der Erfindung zugrunde liegende Aufgabe wird darin gesehen, eine Kugelgelenkverbindung der eingangs genannten Art anzugeben, welche einen schnellen Austausch der Kugel ermöglicht, wobei die Kugelgelenkverbindung eine hohe Kompaktheit aufweisen soll.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist an einer Kugelgelenkverbindung der eingangs genannten Art ein mit dem Endbereich verbindbares Klemmelement vorgesehen, welches ein Paar voneinander beabstandete Finger aufweist, welche sich über die Einsetzöffnungen erstrecken und einen Teil davon abdecken.

Der erfindungsgemäße Kugelgelenklenker weist eine Lenkeröffnung auf, in der ein lösbarer abgeflachter Kugelkörper mit einem sphärischen Umfang aufgenommen ist. Die Lenkeröffnung weist eine sphärisch ausgebildete innere Oberfläche auf, die dem sphärischen Umfang des Kugelkörpers angepasst ist. Ein Paar von Einsetzöffnungen sind an einer Seite des Endbereichs des Lenkers ausgebildet und an gegenüberliegenden Seiten der Lenkeröffnung sowie an gegenüberliegenden Seiten einer Längsachse des Kugelgelenklenkers angeordnet. Ausgehend von einer Seite des Endbereichs des Lenkers erstrecken sich die

Einsetzöffnungen nur teilweise in den Endbereich hinein. Wenn der Kugelkörper zu den Einsetzöffnungen ausgerichtet ist, kann der Kugelkörper durch die Öffnungen entnommen und ausgetauscht werden. An dem Endbereich ist neben der Lenkeröffnung eine Klemmenvertiefung ausgebildet, in der eine Klemme lösbar aufgenommen ist. Die Klemme weist Vorsprünge auf, die an dem Kugelkörper angreifen und verhindern, dass der Kugelkörper entfernbar ist, wenn dieser zu den Einsetzöffnungen ausgerichtet ist.

Durch diese Ausbildung weist der Kugelkörper eine dickere und einteilige Ausbildung auf und ist trotzdem zu Servicezwecken austauschbar. Ein einteilig gefertigter und wärmebehandelter Kugelkörper reduziert Teilekosten und die dickere Ausbildung des Kugelkörpers verbessert die Haltbarkeit. Die Klemme kann als simples Blechteil ausgebildet sein, dass keine teuren Materialien oder Herstellungsprozesse erfordert. Die Wartung des Kugelkörpers ist einfach, da sowohl das Herausnehmen als auch das Einsetzen des Kugelkörpers mit einem einzigen Schraubenschlüssel oder einem ähnlichen Werkzeug durchgeführt werden kann. Das Entfernen eines Federrings mit einer Federringzange ist nicht erforderlich.

Ein erfindungsgemäßer Kugelgelenklenker kann beispielsweise als Verbindungslenker an einer herkömmlichen Dreipunkt-Anhängevorrichtung Verwendung finden.

Anhand der Zeichnungen, die ein Ausführungsbeispiel der Erfindung zeigen, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine perspektivische Explosionsansicht eines erfindungsgemäßen Lenkers mit Kugelgelenkverbindung,
- Fig. 2: eine Ansicht ähnlich zu der aus Figur 1 mit in der Kugelgelenkverbindung montiertem Kugelkörper,
- Fig. 3: eine Seitenansicht des Lenkers mit Kugelgelenkverbindung mit in Betriebsstellung ausgerichtetem Kugelkörper,
- Fig. 4: eine Schnittansicht entlang der Linie 4-4 aus Figur 3 und
- Fig. 5: eine Schnittansicht entlang der Linie 5-5 aus Figur 3.

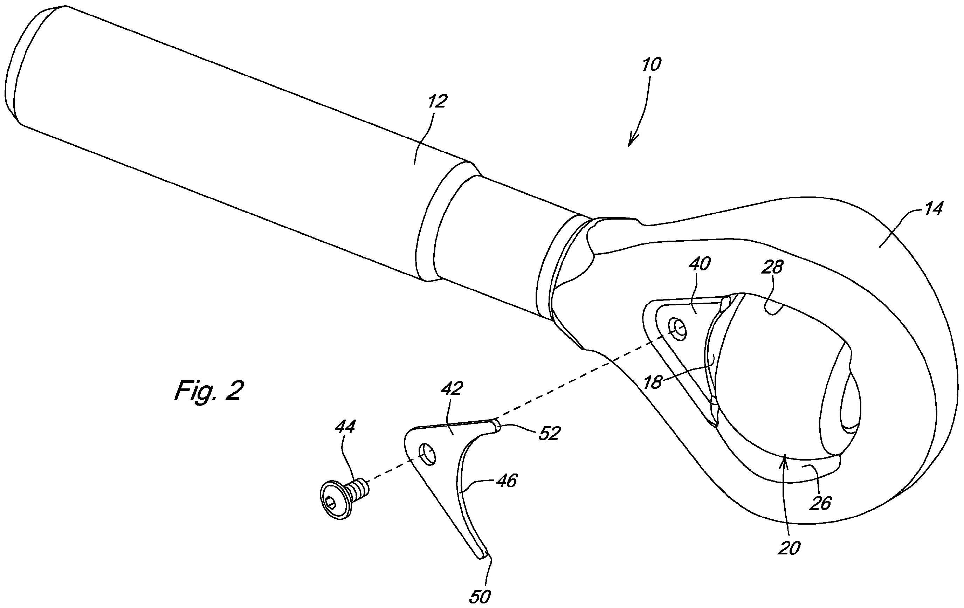

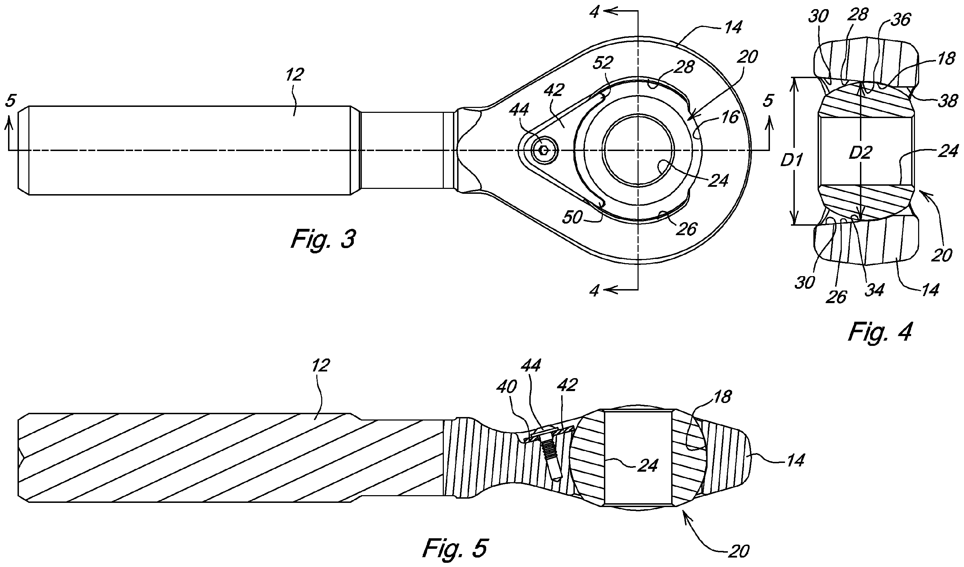

Wie in Figur 3 dargestellt ist, umfasst ein Lenker 10 einen Körper oder Schaft 12 und einen Endbereich 14 mit einer Lenkeröffnung 16. Der Endbereich 14 weist eine sphärisch ausgebildete innere Oberfläche 18 auf. Ein abgeflachter Kugelkörper 20 weist eine sphärisch ausgebildete Außenfläche 22, die der inneren Oberfläche 18 entsprechend ausgebildet ist, und eine mittige axiale Bohrung 24 auf. Der Lenker 10 umfasst ein Paar Einsetzöffnungen 26, 28, welche auf gegenüberliegenden Seiten der Lenkeröffnung 16 angeordnet sind und welche einen inneren Rand aufweisen, der in die innere Oberfläche 18 übergeht. Wie am besten in Figur 4 zu sehen ist, erstrecken sich die Einsetzöffnungen 26, 28 nur an einer Seite der inneren Oberfläche 18 zu einer Seite des Endbereichs 14. Wie auch am besten in Figur 4 zu sehen ist, sind die äußeren Enden 30, 32 der Einsetzöffnungen 26, 28 weiter voneinander beabstandet als ihre inneren Enden 34, 36. Mit anderen Worten, die äußeren Enden 30, 32 der Einsetzöffnungen 26, 28 sind in einem ersten Abstand D1 zueinander beabstandet und die inneren Enden 34, 36 sind in einem zweiten Abstand D2 zueinander beabstandet, wobei der erste Abstand D1 größer als der zweite Abstand D2 ist. Die schräge Ausrichtung der Einsetzöffnungen 26, 28 trägt dazu bei, dass der Kugelkörper 20 auf seichte Weise in die Lenkeröffnung 16, in der in Figur 2 dargestellten Stellung, eingesetzt werden kann und innerhalb der inneren Oberfläche der Lenkeröffnung 16 verdrehbar bzw. rotierbar gelagert ist. Des Weiteren erstreckt sich eine zylindrische Bohrung 38 an der gegenüberliegenden Seite der inneren Oberfläche 18 zu der anderen Seite des Endbereichs 14. Der Durchmesser der Bohrung 38 ist vorzugsweise klein genug, um zu verhindern, dass der Kugelkörper 20 aus dem Endbereich 14 über die Bohrung 38 entnommen werden kann.

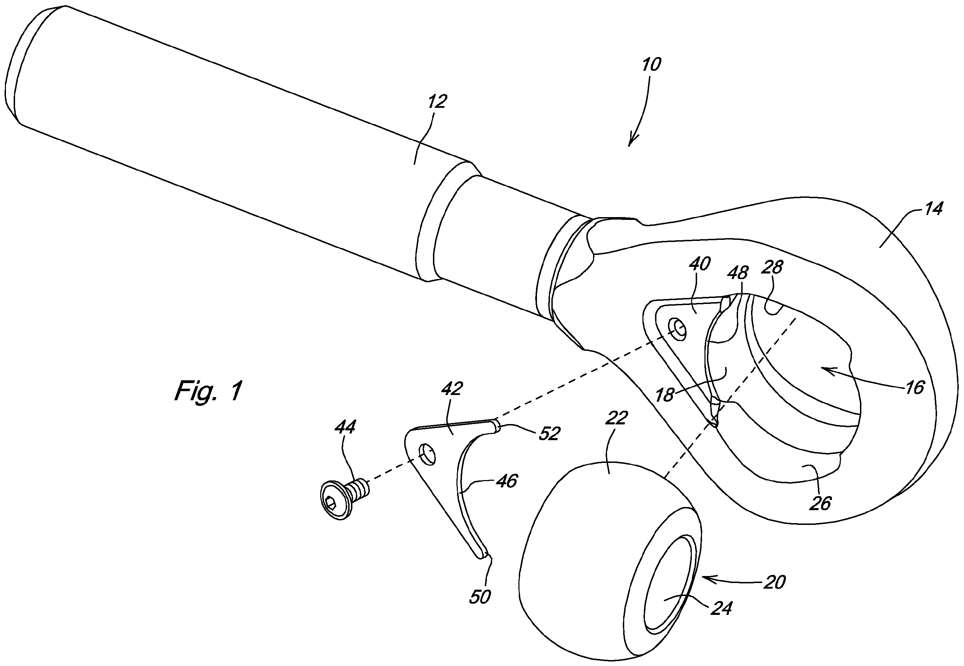

Wie in Figur 1 zu sehen ist, ist eine Aussparung 40 vorgesehen, die auf einer Seite des Endbereichs 14 neben der Lenkeröffnung 16 angeordnet ist. In der Aussparung 40 ist eine abnehmbare Klemme 42 aufgenommen, die mittels einer Schraube 44 daran befestigt ist. Die Klemme 42 weist einen gekrümmten konkaven Rand 46 auf, welcher der Lenkeröffnung 16 zugewandt angeordnet ist und leicht über den Rand 48 der Lenkeröffnung 16 hinausragt.

Die Klemme 42 weist ein Paar voneinander beabstandete Finger 50, 52 auf, welche sich über die Einsetzöffnungen 26, 28 erstrecken und einen Teil davon abdecken (siehe Figuren 3 und 5).

Die Finger 50, 52 sind derart dimensioniert, dass sie eine betriebsbedingte Rotationsbewegung des Kugelkörpers 20 innerhalb der inneren Oberfläche 18 nicht störend beeinflussen. Jedoch, wenn der Kugelkörper 20 zu den Einsetzöffnungen 26, 28 ausgerichtet ist bzw. mit diesen fluchtet, wie in Figur 2 dargestellt ist, verhindern die Finger 50, 52, dass der Kugelkörper 20 aus der Lenkeröffnung 16 herausgenommen werden kann. Aufgrund dessen, dass die Klemme 42 in der Aussparung 40 aufgenommen ist, werden weder die Gesamtabmessungen des Endbereichs 14 vergrößert noch andere Teile während normaler Betriebsbedingungen störend beeinflusst.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung gemäß den Ansprüchen fallen.

## Patentansprüche

1. Kugelgelenklenker umfassend einen langgezogenen Lenkerteil mit einer Längsachse, eine an einem Endbereich (14) des Lenkers (10) ausgebildete Lenkeröffnung (16), welche eine mittig angeordnete Querachse aufweist, die in Bezug zur Längsachse senkrecht ausgerichtet ist, einen herausnehmbaren, abgeflachten Kugelkörper (20), mit einer Breite, die durch gegenüberliegende im Wesentlichen flach ausgebildete Seiten definiert ist und mit einer sphärisch ausgebildeten Umfangsfläche, wobei die Lenkeröffnung (16) eine innere sphärisch ausgebildete Oberfläche aufweist, die passend zu der sphärisch ausgebildeten Umfangsfläche des Kugelkörpers (20) ausgebildet ist, und mit einem Paar von Einsetzöffnungen (26, 28) versehen ist, die an gegenüberliegenden Seiten der Längsachse angeordnet sind und sich nur teilweise in den Endbereich (14) hinein in paralleler Richtung zur Querachse erstrecken, wobei der Kugelkörper (20) von den Einsetzöffnungen (26, 28) aufnehmbar ist, wenn dieser mit seinen gegenüberliegenden Seiten parallel zur Querachse ausgerichtet ist, wobei ein mit dem Endbereich (14) verbindbares Klemmelement (42) vorgesehen ist, um zu verhindern, dass der Kugelkörper (20) aus der Lenkeröffnung (16) bewegt werden kann, wenn dieser zu den Einsetzöffnungen (26, 28) ausgerichtet ist, **dadurch gekennzeichnet, dass** das Klemmelement (42) ein Paar voneinander beabstandete Finger (50, 52) aufweist, welche sich im montierten Zustand des Klemmelements über die Einsetzöffnungen (26, 28) erstrecken und einen Teil davon abdecken.

2. Kugelgelenklenker nach Anspruch 1, **dadurch gekennzeichnet, dass** der Kugelkörper (20) mit einer zylindrischen Bohrung (24) versehen ist, die sich durch den Kugelkörper (20) erstreckt und im Wesentlichen senkrecht zu den gegenüberliegenden Seiten ausgerichtet ist.

3. Kugelgelenklenker nach Anspruch 1 oder 2, **dadurch gekennzeichnet, dass** an dem Endbereich (14) des Lenkers (10) neben der Lenkeröffnung (16) eine Aussparung (40) ausgebildet ist, in der das Klemmelement (42) aufgenommen ist.

4. Kugelgelenklenker nach einem der Ansprüche 1 bis 3, **dadurch gekennzeichnet, dass** das Klemmelement (42) einen konkav gekrümmten Rand aufweist, welcher der Lenkeröffnung (16) zugewandt ist.

5. Kugelgelenklenker nach einem der Ansprüche 1 bis 4, **dadurch gekennzeichnet, dass** jede Einsetzöffnung (26, 28) ein inneres Ende und ein äußeres Ende aufweist, wobei die inneren Enden der Einsetzöffnungen (26, 28) sich an die innere sphärische Oberfläche anschließen.

6. Kugelgelenklenker nach Anspruch 5, **dadurch gekennzeichnet, dass** die äußeren Enden einen ersten Abstand (D1) und die inneren Enden einen zweiten Abstand (D2) zueinander aufweisen, wobei der erste Abstand (D1) größer als der zweite Abstand (D2) ist.

## Claims

1. Ball joint link arm, comprising an elongate link arm part with a longitudinal axis, a link arm opening (16) which is formed on an end region (14) of the link arm (10) and has a centrally arranged transverse axis which is oriented perpendicularly with respect to the longitudinal axis, a removable flattened ball body (20), with a width which is defined by opposite sides of substantially flat design, and with a spherically designed circumferential surface, wherein the link arm opening (16) has an inner surface which is of spherical design and is designed in a manner matching the spherically designed circumferential surface of the ball body (20), and with a pair of insertion openings (26, 28) which are arranged on opposite sides of the longitudinal axis and only partially extend into the end region (14) in a direction parallel to the transverse axis, wherein the ball body (20) can be accommodated by the insertion openings (26, 28) when said ball body is oriented with its opposite sides parallel to the transverse axis, wherein a clamping element (42) which is connectable to the end region (14) is provided in order to prevent the ball body (20) from being able to be moved out of the link arm opening (16) when said ball body is aligned with the insertion openings (26, 28), **characterized in that** the clamping element (42) has a pair of spaced-apart fingers (50, 52) which, in the mounted state of the clamping element, extend over the insertion openings (26, 28) and cover a part thereof.

2. Ball joint link arm according to Claim 1, **characterized in that** the ball body (20) is provided with a cylindrical bore (24) which extends through the ball body (20) and is oriented substantially perpendicularly to the opposite sides.

3. Ball joint link arm according to Claim 1 or 2, **characterized in that** a recess (40) in which the clamping element (42) is accommodated is formed on the end region (14) of the link arm (10) next to the link arm opening (16).

4. Ball joint link arm according to one of Claims 1 to 3, **characterized in that** the clamping element (42) has a concavely curved edge which faces the link arm opening (16).

5. Ball joint link arm according to one of Claims 1 to 4, **characterized in that** each insertion opening (26, 28) has an inner end and an outer end, wherein the inner ends of the insertion openings (26, 28) adjoin the inner spherical surface.

6. Ball joint link arm according to Claim 5, **characterized in that** the outer ends are at a first distance (D1) and the inner ends at a second distance (D2) from each other, wherein the first distance (D1) is greater than the second distance (D2).

## Revendications

1. Bielle à articulation sphérique comprenant
une partie allongée de bielle présentant un axe longitudinal,
une ouverture de bielle (16) formée au niveau d'une extrémité (14) de la bielle (10) et présentant un axe transversal disposé centralement et orienté perpendiculairement à l'axe longitudinal,
un corps sphérique (20) amovible et aplati dont la largeur est définie par les côtés essentiellement plats opposés et dont la surface périphérique est sphérique, l'ouverture de bielle (16) présentant une surface intérieure sphérique adaptée à la surface périphérique sphérique du corps sphérique (20),
et une paire d'ouvertures d'insertion (26, 28) disposée sur des côtés opposés de l'axe longitudinal et ne s'étendant qu'en partie à l'intérieur de la partie d'extrémité (14) dans une direction parallèle à l'axe transversal,
le corps sphérique (20) pouvant être repris par les ouvertures d'insertion (26, 28) lorsque ses côtés opposés sont alignés parallèlement à l'axe transversal,
un élément de serrage (42) apte à être relié à la partie d'extrémité (14) étant prévu pour empêcher que le corps sphérique (20) puisse être déplacé hors de l'ouverture de bielle (16) lorsqu'il est aligné sur les ouvertures d'insertion (26, 28),
**caractérisée en ce que**
l'élément de serrage (42) présente deux doigts (50, 52) disposés à distance mutuelle, qui s'étendent au-delà des ouvertures d'insertion (26, 28) et en recouvrent une partie lorsque l'élément de serrage est en position montée.

2. Bielle à articulation sphérique selon la revendication 1, **caractérisée en ce que** le corps sphérique (20) est doté d'un alésage cylindrique (24) qui traverse le corps sphérique (20) et qui est orienté essentiellement à la perpendiculaire des côtés opposés.

3. Bielle à articulation sphérique selon les revendications 1 ou 2, **caractérisée en ce qu'**une découpe (40) dans laquelle l'élément de serrage (42) est repris est formée sur la partie d'extrémité (14) de la bielle (10), à côté de l'ouverture de bielle (16).

4. Bielle à articulation sphérique selon l'une des revendications 1 à 3, **caractérisée en ce que** l'élément de serrage (42) présente un bord à courbure concave tourné vers l'ouverture de bielle (16).

5. Bielle à articulation sphérique selon l'une des revendications 1 à 4, **caractérisée en ce que** chaque ouverture d'insertion (26, 28) présente une extrémité intérieure et une extrémité extérieure, les extrémités intérieures des ouvertures d'insertion (26, 28) se raccordant à la surface sphérique intérieure.

6. Bielle à articulation sphérique selon la revendication 5, **caractérisée en ce que** les extrémités extérieures présentent un premier écart mutuel (D1) et des extrémités intérieures un deuxième écart mutuel (D2), le premier écart (D1) étant supérieur au deuxième écart (D2).
